# EUROPEAN PATENT SPECIFICATION

(11) **EP 0 918 969 B1**
(45) Date of publication and mention of the grant of the patent: **16.05.2001**
(21) Application number: 97939549.8
(22) Date of filing: 25.08.1997
(51) Int. Cl.: F16L 55/05, F04B 11/00, F04D 29/66, F15B 1/10, F15B 1/16

(54) **NOISE SUPPRESSOR FOR HYDRAULIC SYSTEMS**
SCHALLDÄMPFER FÜR HYDRAULISCHE SYSTEME
ATTENUATEUR DE BRUIT DESTINE A DES SYSTEMES HYDRAULIQUES

(30) Priority: 26.08.1996 US 24591 P; 27.08.1996 US 703647; 22.10.1996 US 735344
(43) Date of publication of application: 02.06.1999
(73) Proprietor: Eaton Aeroquip Inc., Maumee, OH 43537 (US)
(72) Inventor: JENSKI, Gary, M., Jr., Jackson, MI 49201 (US); SHIERY, Jeffery, C., Parma, MI 49269 (US)
(74) Representative: Patentanwälte Rüger, Barthelt & Abel
(86) International application number: US9714954
(87) International publication number: WO9809108

(56) References cited:
- DE-A- 3 842 298
- US-A- 2 609 001
- US-A- 2 841 181
- US-A- 3 212 602
- US-A- 4 628 964
- US-A- 4 638 838
- US-A- 4 759 387

## Description

### Technical Field

The present invention relates to a fluid impulse dampener, or noise suppressor. In particular, the present invention relates to a noise suppressor has an improved bladder design and bladder support spool.

The present invention is especially useful in suppressing noise in various hydraulic systems. In preferred embodiments, the noise suppressor is positioned in the hydraulic system near a pump outlet.

### Background of the Invention

Noise suppressors are used in various hydraulic systems to compress or dampen the pulses of fluid which are flowing and pulsing through the hydraulic system. The pulses (or changes in fluid pressure) in the fluid flow cause noise and wear on hydraulic systems. One type of noise suppressor comprises a housing having a pressure chamber defined between a flexible bladder and an interior surface of the housing. A pressurized gas is supplied to the pressure chamber. The interior of the bladder defines a fluid receiving chamber. The bladder is coaxially positioned over a tubular support or spool in the chamber. The support has radially extending perforations or holes. The fluid chamber receives the flow of fluid moving through the hydraulic system. The compressibility of the pulsed fluid is achieved as the fluid passes through the fluid chamber as follows: the peak of pulsing fluid passes out through the holes in the support and pushes against the bladder. The bladder expands into the pressure chamber. The pressurized gas on the opposite side of the bladder exerts a counter force on the bladder, thus minimizing or dampening the peak of the fluid pulse. The gas pressure pushes or acts against the bladder causing the bladder to be forced against the support spool. The pulsations of the fluid passing through the housing are absorbed or dampened in the fluid chamber due to the deflections (expansions and contractions) of the bladder and a consequent compression of the gas present in the pressure chamber.

The noise suppressor housings must also be adequately sealed to withstand the normal gas charge pressures, which are typically in the range of approximately 50 to about 80% of operating pressure. The pulsations of the fluid cause the bladder to expand and contract and the bladder moves in the housing. In the past, it has been difficult to adequately seal the bladder in the housing of the noise suppressor so that fluid does not leak from the edges of the bladder into the gas pressure chamber and/or from the noise suppressor housing.

In addition, in currently used bladder-type noise suppressors, the normal gas charge pressures and the high temperatures of the fluids passing through the noise suppressors cause damage to the bladder. The bladder is under constant expansion and contraction pressures. Portions of the bladder come into repeated contact with the support stool. The bladder wears out at the areas on the bladder where the bladder contacts the spool. Portions of the bladder are removed from these contact areas due to the highly repetitive nature of the pulsing cycles the fluid flowing through the noise suppressor. In particular, the portions of the bladder adjacent the holes in the spool are prematurely worn or torn-away. That is, the edges of the holes in the spool wear away at the bladder causing the bladder to prematurely wear out and fail.

Previous attempts to prevent damage to the bladder have included the U.S. Patent No. 4,759,387 which placed a helical wave band between a spool and a diaphragm. However, the diaphragm was still subject to undue wear. Other attempts include U.S. Patent No. 4,628,964 which used a supporting cylinder comprised of a plurality of wire nets over a reinforcing cylinder. However, these previous attempts do not have sufficient durability needed in many types of hydraulic systems and the helical bands and wire nets tend to deform over time due to repeated exposure to pulsing fluids, thereby decreasing the effectiveness of the noise suppressors.

US-A-4,638,838 relates to hydropneumatic accumulators and in one embodiment an acoustic filter, which are designed to overcome the problems of clogging, bag fracturing and atomisation causing explosions. A two-part structure is proposed having an orificed inner tube and a spaced outer diffuser assembly providing annular passages, the diffuser assembly having openings which have large passage cross-sections compared with that of openings in the tube, to prevent clogging by and atomisation of any oils present. At least the outer parts of the diffuser assembly are made of flexible material similar to that of the bag. No means are described or suggested for preventing material of the bladder from being extruded into and caught in the openings in the diffuser assembly and in consequence after a period of time being worn and sheared off.

Therefore, there is a need for a noise suppressor which overcomes the above-described drawbacks and which has increased durability.

### Disclosure of the Invention

The present invention is directed to an improved noise suppressor as defined in claim 1. The present invention reduces wear on hydraulic system and is easily installed in existing hydraulic systems. Preferred embodiments are defined in the sub-claims.

The noise suppressor has a longitudinal housing which defines an axially extending bore. A bladder is coaxially positioned in the bore. The bladder is supported within the bore by a spool assembly. In preferred embodiments, the bladder is made of an elastic material such as a durable EPR or rubber-type material which results in extremely long service life and requires minimal servicing.

The spool assembly is coaxially positioned within the bladder. The spool assembly is preferably a spool type device which defines a longitudinally extending bore. The bore in the spool assembly receives the fluid flowing through the hydraulic system. When pulses or changes in fluid pressure occur, the spool assembly provides a means for the fluid to flow into the bladder cavity.

It is the object of the invention to provide an improved noise suppression device having a spool assembly which provides an increased useful life to the resilient bladder in the noise suppressor.

### Brief Description of the Drawings

Fig. 1 is a cross-sectional view of a first embodiment of a noise suppressor device.

Fig. 2 is a cross-sectional view showing an enlargement of a portion of Fig. 1, showing no, or an equilibrium of, pressure of fluid against one side of a bladder and pressure of gas on an opposing side of the bladder.

Fig. 3 is a cross-sectional view, similar to Fig. 2, but showing lesser pressure of fluid against a bladder than pressure of gas on an opposing side of the bladder.

Fig. 4 is a cross-sectional view showing an enlargement of a perforation in an outer spool layer of a spool assembly.

Fig 5 is a cross-sectional view showing a different embodiment of a noise suppressor device showing no, or an equilibrium, of pressure fluid against one side of a bladder and pressure of gas on an opposing side of the bladder.

Fig. 6 is a cross-sectional view, similar to Fig. 5, but showing lessor pressure of fluid against a bladder than pressure of gas on an opposing side of the bladder.

### Best Mode of Carrying out Invention

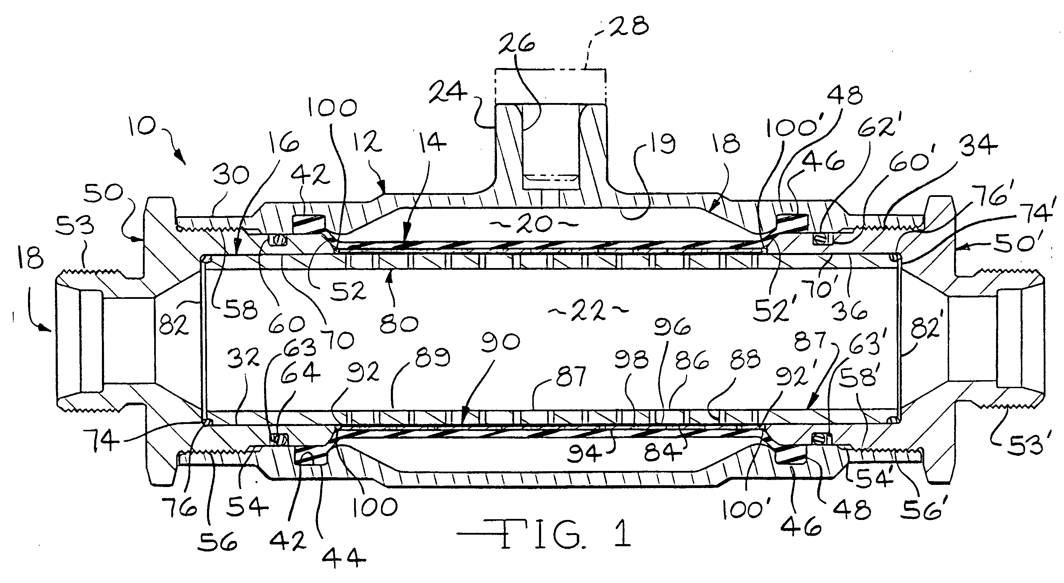

Fig. 1 generally shows a noise suppressor device 10 comprising a housing 12, a generally hollow flexible bladder 14, and a spool assembly 16. The bladder 14 is coaxially positioned within a longitudinally extending bore 18 in the housing 12. The spool assembly 16 is coaxially positioned within the bladder 14. The shape of the longitudinally extending bore 18 through the housing 12 is defined by an inner surface 19 of the housing 12. The inner surface 19 and the bladder 14 define a pressure chamber 20 while the hollow bladder 14 and the spool assembly 16 define a fluid chamber 22.

The housing 12 further comprises a charging port 24 which defines a radially extending bore 26 for receiving a high pressure charging valve 28, shown in phantom. The radially extending bore 26 is in communication with the pressure chamber 20. A supply of a gas, such as nitrogen, is introduced under pressure to the pressure chamber 20.

The longitudinally extending bore 18 of the housing 12 has a first end 30 having a first interior surface 32 and a second end 34 having a second interior surface 36. The interior surfaces 32 and 36 engagingly receive the spool assembly 16. The housing 12 further defines a first groove or detent 42 for receiving a first end 44 of the bladder 14 and a second groove or detent 46 for receiving a second end 48 of the bladder 14.

The noise suppressor device 10 further includes a first adapter 50 axially positioned within the first end 30 of the housing 12 and a second adapter 50' axially positioned within the second end 34 of the housing 12.

In the embodiment shown, the first adapter 50 comprises a first end 52 which is positioned adjacent the bladder 14 when the adapter 50 is in position in the housing 12 and a second, opposing end 53 which is external to the housing 12 for receiving a hose or other coupling means, not shown. The first adapter 50 has an exterior surface 54 which includes a threaded portion 56 located between the first end 52 and the second end 53. The threaded portion 56 engages a corresponding threaded portion 58 on the interior surface 32 of the first opening 30. The first adapter 50 further includes a detent or groove 60 which circumferentially extends around the exterior surface 54. The detent or groove 60 receives a packing or sealing member 62, such as an 0-ring and washer 63, for sealing the first adapter 50 into the opening 30 of the housing 12.

The first end 52 of the adapter 50 can have an angled or sloped surface to readily engage the first end 44 of the bladder 14. The first end 52 and the exterior surface 54 of the first adapter 50 secure the first end 44 of the bladder 14 in the detent 42 of the housing 12.

The first adapter 50 has an interior surface 70 which defines a flange portion 74. The interior surface 70 of the first adapter 50 axially receives the spool assembly 16. In a preferred embodiment, the spool assembly 16 is held in position against the interior surface 70 of the first adapter 50. In certain embodiments, a packing or sealing member 76 is positioned adjacent the interior flange portion 74 to secure the spool assembly 16 within the first adapter 50.

The noise suppressor device 10 further includes the second adapter 50' which is axially positioned within the second end 34 of the housing 12. In the embodiment shown, the first adapter 50 and the second adapter 50' have substantially the same shape or configuration; however, it is to be understood that it is within the contemplated scope of the present invention that the first adapter 50 and the second adapter 50' can have differently shaped configurations to allow for the installation of different couplings or hoses on the distal ends 53 and 53' of the first adapter 50 and second adapter 50', respectively.

In the embodiment shown, the second adapter 50' comprises a first end 52' which is positioned adjacent the bladder 14 when the second adapter 50' is in position in the housing 12 and a second, opposing end 53' which is external to the housing 12 for receiving a hose or other coupling means, not shown. The second adapter 50' has an exterior surface 54' which includes a threaded portion 56' located between the first end 52' and the second end 53'. The threaded portion 56' engages a corresponding threaded portion 58' on the interior surface 36 of the second opening 34. The second adapter 50' further includes a detent or groove 60' which circumferentially extends around the exterior surface 54'. The detent or groove 60' receives a packing or sealing member 62', such as an O-ring and washer 63', for sealing the second adapter 50' into the second opening 34 of the housing 12.

The first end 52' of the second adapter 50' can have an angled or sloped surface to readily engage the second end 48 of the bladder 14. The first end 52' and the exterior surface 54' of the second end 50' secure the second end 48 of the bladder 14 in the second detent 46 of the housing 12.

The second adapter 50' has an interior surface 70' which defines a flange portion 74'. The interior surface 70' of the second adapter 50' also axially receives the spool assembly 16. In a preferred embodiment, the spool assembly 16 is held in position against the interior surface 70' of the second adapter 50'. In certain embodiments, a packing or sealing member 76' is positioned adjacent the interior flange 74' to secure the spool assembly 16 within the second adapter 50'.

The spool assembly 16 comprises an inner spool layer 80 and an outer spool layer 90. The inner spool layer 80 is coaxially positioned within the bladder 14. The inner spool layer 80 has a first end 82 which is adjacent the first adapter 50 and a second end 82' which is adjacent the second adapter 50'. The first end 82 and second end 82' are held in position against the sealing members 74 and 74', respectively. The inner spool layer 80 has an outer surface 84 and an inner surface 86.

A plurality of radially oriented first perforations 88 extend through the inner spool layer 80 from the outer surface 84 to the inner surface 86. The perforations 88 are preferably evenly spaced along at least a center portion 89 of the inner spool layer 80. The perforations 88 are arranged in a first pattern on the inner spool layer 80. In a preferred embodiment, the perforations 88 in the center portion 89 begin at a point adjacent the first end 52 of the first adapter 50 and terminate at a point adjacent the second end 52' and the second adapter 50'. The generally evenly spaced perforations 88 on the inner spool layer 80 provides sufficient openings for changes in fluid pressure to pass through the perforations 88.

The inner surface 86 of the inner spool layer 80 defines an axially extending bore 87. The axially extending bore 87 is sealed from the interior chamber 20 by the first end 44 and second end 48 of the bladder 14.

The outer spool layer 90 comprises a first end 92 which is adjacent the first adapter 50 and a second end 92' which is adjacent the second adapter 50'. The outer spool layer 90 is coaxially positioned on the inner spool layer 80 and is positioned between the bladder 14 and the inner spool layer 80. The outer spool layer 90 has an outer surface 94 and an inner surface 96.

A plurality of radially oriented second perforations 98 extend through the outer layer 90 from the outer surface 94 to the inner surface 96. The perforations 98 are preferably evenly spaced along the outer spool layer 90. The perforations 98 are arranged in a second pattern on the outer spool layer 90. The generally evenly spaced perforations 98 on the outer spool layer 90 provides sufficient openings for changes in fluid pressure to pass through the perforations 98.

In certain embodiments, the spool assembly 16 further comprises a first spacer 100 which is coaxially positioned adjacent the first end 92 of the outer spool layer 90 and a second spacer 100' coaxially positioned adjacent the second end 92' of the outer spool layer 90. It is to be understood however, that he present invention is also useful with one spacer positioned adjacent at least one of the ends of the outer spool layer.

In a preferred embodiment, the inner spool layer 80 defines a first specified thickness or width between the outer surface 84 and the inner surface 86 and the outer spool layer 90 defines a second specified thickness or width between the outer surface 94 and the inner surface 96. In a preferred embodiment, the thickness or width of the inner spool layer 80 is greater than the thickness or width of the outer spool layer 90.

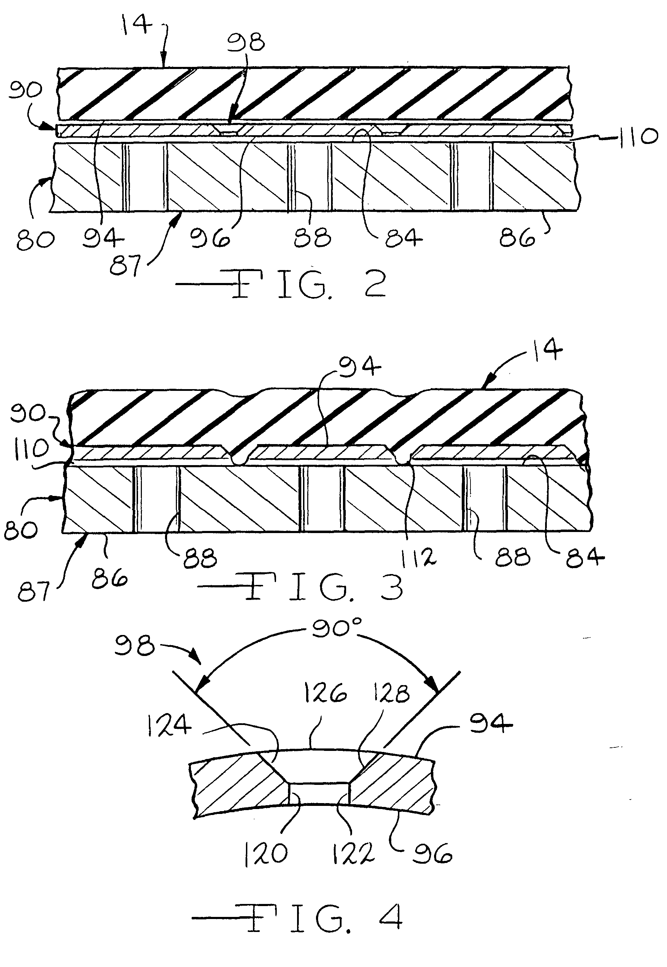

The perforations 98 in the outer spool layer 90 define a predetermined or specified pattern such that the perforations 98 are in a staggered configuration with respect to the perforations 88 in the inner spool layer 80. The perforations 98 extend through the outer spool layer 90 such that each perforation 98 is adjacent a portion of the inner spool layer 80. The perforations 88 extend through the inner spool layer 80 such that each perforation 88 is adjacent a portion of the outer spool layer 90. The perforations 88 and 98 are offset or non-aligned, as can be best seen in Fig. 2, such that there is no direct line of sight through the inner spool layer 80 and the outer spool layer 90 along a line perpendicular to the plane of the outer surface 94 of the outer spool layer 90.

In a preferred embodiment, the perforations 88 in the inner spool layer 80 define a first, specified diameter and the perforations 98 in the outer spool layer 90 define a second specified diameter. In certain preferred embodiments, the outer spool layer 90 has a thickness ranging from about 0.20 to about 0.76 mm (about 0.008 to about 0.03 inches) while the inner spool layer 80 is approximately 2-4 times thicker than the outer spool layer 90. The outer spool layer 90 is coaxially positioned over the inner spool layer 80 such that a small unobstructed gap 110 or clearance exists between the outer spool layer 90 and the inner spool layer 80. The gap 110 defines a fluid flow path for the fluid. The gap 110 is preferably less than the thickness of the outer spool layer 90.

In a preferred embodiment, the width of the gap 110 ranges from about 0.013mm to about 0.089mm (about 0.0005 to about 0.0035 inches). The gap 110 provides a tortuous, yet unobstructed, path for the fluid to flow from the axial bore 87 through the perforations 88, through the gap 110, through the perforations 98, and finally contacting the bladder 14. In operation, any fluid flowing through the noise suppressor device 10 will substantially fill the gap 110 between the outer spool layer 90 and inner spool layer 80.

When fluid flows through the axial bore 87 in the inner spool layer 80, the fluid also flows through the perforations 88 in the inner spool layer 80, through the gap 110, and through the perforations 98 in the outer spool layer 90. The fluid contacts the bladder 14 causing the bladder 14 to expand or distend into the pressure chamber 20. The gas pressure on the bladder 14 keeps the bladder 14 from expanding too far during peak or pulse periods of fluid passing through the axial bore 87. The gas in the pressure chamber 20 is compressed, thus dampening or absorbing the forces of the pulsing fluid.

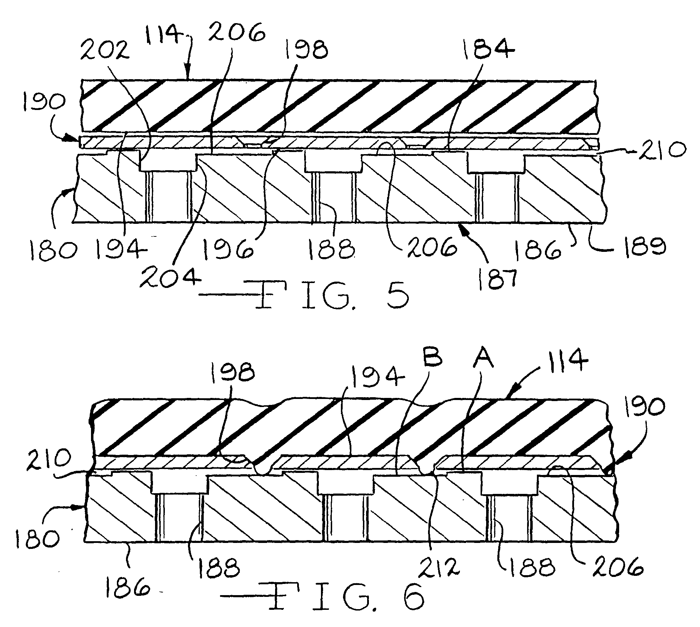

As shown in Fig. 3, when a trough or low pulse of fluid passes through the axial bore 87, the bladder 14 is pushed by the gas pressure radially against the outer surface 94 of the outer spool layer 90. Portions 112 of the bladder 14, under pressure from the gas in the pressure chamber 20, extend into the gap 110 between the outer spool layer 90 and the inner spool layer 80. The portions 112 of the bladder 14 contact the outer surface 84 of the inner spool layer 80. Further radial movement or distortion of the bladder 14 is prevented by the outer surface 84. The inner spool layer 80 acts to prevent the material comprising the bladder 14 from being sheared off. The offset or non-aligned staggered configuration of the perforations 98 and 88 prevent the bladder 14 from being extruded too far.

In certain embodiments, the perforations 98 in the outer spool layer 90 can have a countersink-type configuration to further prevent damage to the bladder 14. Fig. 4 shows an enlargement of a perforation 98 in one embodiment of an outer spool layer 90. It is to be understood however, that the perforation 98 can have other configurations and the configuration shown in Fig. 4 provides one example of a suitable shape for a perforation 98. The perforation 98 comprises a first portion 120 which extends from the inner surface 96 of the inner spool layer 90 in a direction toward the outer surface 94. The first portion 120 has a first interior diameter 122. The first portion 120 is generally perpendicular to a plane defined by the inner surface 96. The perforation 98 defines a second portion 124 which is in coaxial alignment with the first portion 120. The second portion 124 extends from the first portion 120 to the outer surface 94 of the outer spool layer 90. The second portion 124 has a second interior diameter 126 which is greater than the first interior diameter 122 of the first portion 120. The second portion 124 has a generally tapered or frustoconical shape, as defined by at least one side wall 128. The second portion 124 defines a countersink-type shape which, in certain preferred embodiments, has an approximately 90° angle as defined by the side wall 128. The second portion 124 further prevents shearing or tearing of the bladder 14 when the bladder 14 is pulled against the outer spool layer 90.

Another embodiment of a spool assembly 116 is shown in Figs. 5-6. It is to be understood that the spool assembly 116 is positioned in the noise suppressor device 10 in substantially the same manner as the embodiment shown in Figs. 1-3, and that, for the sake of ease of illustration, the housing of the noise suppressor device is not shown in Figs. 5-6.

The spool assembly 116 comprises an inner spool layer 180 and an outer spool layer 190. The inner spool layer 180 is coaxially positioned within the bladder 114. The inner spool layer 180 has an outer surface 184 and an inner surface 186. The inner surface 186 of the inner spool layer 180 defines an axially extending bore 187.

A plurality of radially oriented perforations 188 extend through the inner spool layer 180 from the outer surface 184 to the inner surface 186. The perforations 188 are preferably evenly spaced along at least a center portion 189 of the inner spool layer 180. The perforations 188 are arranged in a first pattern on the inner spool layer 180. The generally evenly spaced perforations 188 on the inner spool layer 180 provide sufficient openings for changes in fluid pressure to pass through the perforations 188.

The outer spool layer 190 is coaxially positioned on the inner spool layer 180 and is positioned between the bladder 114 and the inner spool layer 180. The outer spool layer 190 has an outer surface 194 and an inner surface 196.

A plurality of radially oriented perforations 198 extend through the outer layer 190 from the outer surface 194 to the inner surface 196. The perforations 198 are preferably evenly spaced along the outer spool layer 190. The perforations 198 are arranged in a second pattern on the outer spool layer 190. The generally evenly spaced perforations 198 on the outer spool layer 190 provide sufficient openings for changes in fluid pressure to pass through the perforations 198.

In a preferred embodiment, the inner spool layer 180 defines a first thickness or width between the outar surface 184 and the inner surface 186, and the outer spool layer 190 defines a second thickness or width between the outer surface 194 and the inner surface 196. In a preferred embodiment, the thickness or width of the inner spool layer 180 is greater than the thickness or width of the outer spool layer 190.

The perforations 198 in the outer spool layer 190 define the first, predetermined pattern such that the perforations 198 are in a staggered configuration with respect to the perforations 188 in the inner spool layer 180. The perforations 198 extend through the outer spool layer 190 such that each perforation 198 is adjacent a first portion of the fluid flow path of the inner spool layer 180.

The perforations 188 extend through the inner spool layer 180 such that each perforation 188 is adjacent a portion of the outer spool layer 190. The perforations 188 and 198 are offset, as can be best seen in Fig. 5, such that there is no direct line of sight through the inner spool layer 180 and the outer spool layer 190 along a line perpendicular to the plane of the outer surface 194 of the outer spool layer 190.

The outer surface 184 of the inner spool layer 180 defines a plurality of axially oriented fluid flow paths 202. In the embodiment shown in Figs. 5 and 6, each fluid flow path 202 is adjacent and in communication with a corresponding first perforation 188. Each fluid flow path 202 circumferentially extends around the outer surface 184 of the inner spool layer 180. In the embodiment shown in Figs. 5 and 6, the fluid flow path 202 has a first portion 204 and a second portion 206. The first portion 204 of the fluid flow path 202 is adjacent and coaxial with the perforation 188 in the inner spool layer 180. In a preferred embodiment, the first portion 204 has an axially extending length along the outer surface 184 which is longer than the diameter of the perforation 188.

The second portion 206 of the fluid flow path 202 is adjacent and in communication with the first portion 204. The second portion 206 is also adjacent and in communication with the perforation 198 in the outer spool layer 190. In a preferred embodiments, the second portion 206 has an axially extending length along the outer surface 184 which extends at least to a point beyond the perforation 198 in the outer spool 190.

In the embodiment shown in Figs. 5 and 6, the inner spool layer 180 includes fluid flow paths 202 which are adjacent and in communication with each perforation 188.

In a preferred embodiment, the perforations 188 in the inner spool layer 180 define a first, specified diameter and the perforations 198 in the outer spool layer 190 define a second specified diameter. In certain preferred embodiments, the outer spool layer 190 has a thickness ranging from about 0.20 to about 0.76mm (about 0.008 to about 0.03 inches) while the inner spool layer 180 is approximately 2-4 times thicker than the outer spool layer 190. The outer spool layer 190 is coaxially positioned over the inner spool layer 180 such that an unobstructed gap 210 or clearance exists between the outer spool layer 190 and the inner spool layer 180.

The width of the gap 210 between the inner spool layer 180 and the outer spool layer 190 varies. In a preferred embodiment, the width of the gap 210 at the points A, between the inner spool layer 180 and the outer spool layer 190 where there is no fluid flow path 202, ranges from about 0.013mm to about 0.089mm (about 0.0005 to about 0.0035 inches).

The width of the gap 210 at points B, adjacent the second portion 206 of the fluid flow path 202 and the perforations 198 in the outer spool layer 190, ranges from about 0.13 to about 0.18 mm (about 0.005 to about 0.007 inches). The gap 210 provides a tortuous, yet unobstructed, pathway for the fluid to flow from the axial bore 187 through the perforations 188, through the first portions 204 and the second portions 206 of the fluid flow paths 202, through the gap 210, through the perforations 198, and finally contacting the bladder 114. In operation, the fluid flowing through the noise suppressor device will substantially fill the fluid flow path 202 and the gap 210 between the outer spool layer 190 and inner spool layer 180.

When the fluid flows through the axial bore 187 in the inner spool layer 180, the fluid also flows through the perforations 188 in the inner spool layer 180, through the fluid flow path 202, through the gap 210, and through the perforations 198 in the outer spool layer 190. The fluid contacts the bladder 114 causing the bladder 114 to expand or distend into the pressure chamber (not shown). The gas pressure on the bladder 114 keeps the bladder 114 from expanding too far during peak or pulse periods of fluid passing through the axial bore 187. The gas in the pressure chamber is compressed, thus dampening or absorbing the forces of the pulsing fluid.

As shown in Fig. 5, when a trough or low pulse of fluid passes through the axial bore 187, the bladder 114 is pushed by the gas pressure radially against the outer surface 194 of the outer spool layer 190. Portions 212 of the bladder 114, under pressure from the gas in the pressure chamber, extend into the gap 210 between the outer spool layer 190 and the inner spool layer 180. The portions 212 of the bladder 114 contact the second portions 206 of the fluid flow paths 202 of the inner spool layer 180. Further radial movement or distortion of the bladder 114 is prevented by the second portions 206. The inner spool layer 180 acts to prevent the material comprising the bladder 114 from being sheared off. The offset or staggered configuration of the perforations 198 and 188 prevent the bladder 114 from being extruded too far. At the same time, however, the perforations 198 and 188 and the fluid flow paths 202 allow the fluid to quickly and easily flow into and out of the bladder 114.

## Claims

1. A noise suppressor device (10) comprising:
a housing (12) defining an axially extending bore (18);
a bladder (14) coaxially positioned in the bore;
a spool assembly (16) coaxially positioned in the bladder, the spool assembly having an inner spool layer (80) and an outer spool layer (90) which axially surrounds the inner spool layer;
the inner spool layer defines a plurality of first perforations (88) extending therethrough in a first pattern and the outer spool layer defines a plurality of second perforations (98) extending therethrough in a second pattern; and,
a gap is (110) is defined between the inner spool layer and the outer spool layer, the gap providing a fluid flow path between the first perforation and the second perforation;
characterized in that the first perforations (88) in the inner spool layer are offset from the second perforations (98) in the outer spool layer so that each perforation (98) of the outer spool layer is adjacent a portion of the inner spool layer (80) and each perforation (88) of the inner spool layer is adjacent a portion of the outer spool layer (90) whereby a direct line of sight through the first perforations and second perforations is prevented and whereby the inner spool layer (80) acts to prevent the material comprising the bladder (14) from being extruded into the perforations (98) and sheared off.

2. The noise suppressor device of claim 1, wherein the first perforations (88) in the inner spool layer have a first diameter and the second perforations (98) in the outer spool layer have a second diameter, the first diameter of the first perforations in the inner spool layer being substantially the same diameter as the second diameter of the second perforations in the outer spool layer.

3. The noise suppressor device of claim 1, wherein the inner spool layer (80) comprises an aluminum alloy and the outer spool layer (90) comprises a stainless steel material.

4. The noise suppressor device of claim 1, wherein the gap (110) defined between the inner spool layer and the outer spool layer is less than the thickness of the outer spool layer.

5. The noise suppressor device of claim 1, wherein the housing (12) has a first end (30) for receiving a first adaptor (50) and a second end (34) for receiving a second adapter (50), the first and second adapters securing the bladder in the housing.

6. The noise suppressor device of claim 5, wherein the inner spool layer (80) has a first end (82) secured in the first adapter (50) and a second end (82') secured in the second adapter (50').

7. The noise suppressor device of claim 1, wherein the first perforations (88) in the inner spool layer (80) and the second perforations (98) in the outer spool layer (90) each define a generally cylindrical shape.

8. The noise suppressor device of claim 1, wherein the second perforations (98) in the outer spool layer (90) have a first cylindrical portion in coaxial alignment with a frustoconical shape portion.

9. The noise suppressor device of claim 8, wherein the frustoconical portion of the second perforations (98) is defined by an angled wall having an interior angle of approximately 90°.

10. The noise suppressor device of claim 1, wherein the fluid flow path includes a first portion which is adjacent and coaxial with the first perforation (88) and a second portion which is adjacent and in communication with the first portion of the fluid flow path and which is further adjacent and in communication with the second perforation (98) in the outer spool layer.

11. The noise suppressor of claim 10, wherein a portion of the gap (110) between the second portion of the fluid flow path and the outer spool layer ranges from about 0.13 to about 0.18 mm (about 0.005 to about 0.007 inches).

12. The noise suppressor device of claim 1, wherein the bladder (14) and the housing (12) define a pressure chamber which is pressurized to counteract the forces exerted on the bladder by the pressurized fluid flow.

13. The noise suppressor device of claim 1 wherein the gap (110) ranges from about 0.013 mm to about 0.089 mm (about 0.0005 to about 0.0035 inches).

## Patentansprüche

1. Eine Schalldämpfervorrichtung (10) mit:
einem Gehäuse (12) das eine axial verlaufende Bohrung (18) begrenzt;
einer Blase (14), die koaxial in der Bohrung angeordnet ist;
einer in der Blase angeordneten Hülsenanordnung (16), wobei die Hülsenanordnung eine innere Hülsenschicht (80) und eine äußere Hülsenschicht (90), die die innere Hülsenschicht axial umgibt aufweisen;
wobei die innere Hülsenschicht eine Anzahl erster Perforationen (88) definiert, die diese in einem ersten Muster durchdringen und die äußere Hülsenschicht eine Anzahl zweiter Perforationen (98) definiert, die diese in einem zweiten Muster durchdringen;
und ein Spalt (110) zwischen der inneren Hülsenschicht und der äußeren Hülsenschicht begrenzt ist, wobei der Spalt einen Fluidströmungsweg zwischen den ersten Perforationen und den zweiten Perforationen bildet;
dadurch gekennzeichnet, dass die ersten Perforationen (88) in der inneren Hülsenschicht gegenüber den zweiten Perforationen (98) in der äußeren Hülsenschicht versetzt sind, derart, dass jede Perforation (98) der äußeren Hülsenschicht neben einem Abschnitt der inneren Hülsenschicht (89) und jede Perforation (88) der inneren Hülsenschicht neben einem Abschnitt der äußeren Hülsenschicht (900) liegt, so dass ein direkter gerader Durchblick durch die ersten Perforationen und die zweiten Perforationen verhindert ist und wobei die innere Hülsenschicht (80)so wirkt, dass sie verhütet, dass das die Blase (14) bildende Material in die Perforationen (98) extrudiert und abgeschert wird.

2. Schalldämpfervorrichtung nach Anspruch 1, bei der die ersten Perforationen (88) in der inneren Hülsenschicht einen ersten Durchmesser und die zweiten Perforationen (98) in der äußeren Hülsenschicht einen zweiten Durchmesser aufweisen, wobei der erste Durchmesser der ersten Perforationen in der inneren Hülsenschicht im Wesentlichen der gleiche Durchmesser ist wie der zweite Durchmesser der zweiten Perforationen in der äußeren Spulenschicht.

3. Schalldämpfervorrichtung nach Anspruch 1, bei der die innere Hülsenschicht (80) eine Aluminiumverbindung und die äußere Spulenschicht (90) rostfreies Stahlmaterial aufweist.

4. Schalldämpfervorrichtung nach Anspruch 1, bei der der zwischen der inneren Hülsenschicht und der äußeren Hülsenschicht begrenzte Spalt (110) kleiner ist als die Dicke der äußeren Hülsenschicht.

5. Schalldämpfervorrichtung nach Anspruch 1, bei der das Gehäuse (12) ein erstes Ende (30) zur Aufnahme eines ersten Passstückes (50) und ein zweites Ende (34) zur Aufnahme eines zweiten Passstückes (50') aufweist und das erste und das zweite Passstück die Blase in dem Gehäuse festhalten.

6. Schalldämpfervorrichtung nach Anspruch 5, bei der die innere Hülsenschicht (80) ein erstes, in dem ersten Passstück (50) befestigtes Ende (82) und ein in dem zweiten Passstück (50') befestigtes zweites Ende (82') aufweist.

7. Schalldämpfervorrichtung nach Anspruch 1, bei der die ersten Perforationen (88) in der inneren Hülsenschicht (80) und die zweiten Perforationen (98) in der äußeren Spulenschicht (90) jeweils eine im Wesentlichen zylindrische Gestalt aufweisen.

8. Schalldämpfervorrichtung nach Anspruch 1, bei der die zweiten Perforationen (98) in der äußeren Hülsenschicht (90) jeweils einen ersten zylindrischen Abschnitt aufweisen, der koaxial mit einem kegelstumpfförmig gestalteten Abschnitt fluchtet.

9. Schalldämpfervorrichtung nach Anspruch 8, bei der der kegelstumpfförmige Abschnitt der zweiten Perforationen (98) durch eine schräge Wand begrenzt ist, die einen Innenwinkel von etwa 90° aufweist.

10. Schalldämpfervorrichtung nach Anspruch 1, bei der der Fluidströmungsweg einen ersten Abschnitt anschließend an und koaxial mit der jeweiligen ersten Perforation (88) und einen zweiten Abschnitt anschließend an und in Verbindung mit dem ersten Abschnitt des Fluidströmungsweges aufweist, der außerdem nahe bei und in Verbindung mit der zweiten Perforation (98) in der äußeren Hülsenschicht steht.

11. Schalldämpfervorrichtung nach Anspruch 10, bei der ein Teil des Spaltes (110) zwischen dem zweiten Abschnitt des Fluidströmungsweges und der äußeren Hülsenschicht in dem Bereich zwischen etwa 0,13 mm bis etwa 0,18 mm (etwa 0,005 bis etwa 0,007 inches) liegt.

12. Schalldämpfervorrichtung nach Anspruch 1, bei der die Blase (14) und das Gehäuse (12) eine Druckkammer begrenzen, die mit Druck beaufschlagt ist, um den von der Druckmediumströmung auf die Blase ausgeübten Kräften entgegen zu wirken.

13. Schalldämpfervorrichtung nach Anspruch 1, bei der der Spalt (110) in dem Bereich von etwa 0,013 mm bis etwa 0,089 mm (etwa 0,0005 bis etwa 0,00345 inches) liegt.

## Revendications

1. Dispositif atténuateur de bruit (10) comprenant :
un boîtier (12) définissant un alésage s'étendant de manière axiale (18) ;
un sac (14) positionné de manière coaxiale dans l'alésage ;
un assemblage de corps (16) positionné de manière coaxiale dans le sac, l'assemblage de corps comportant une couche de corps interne (80) et une couche de corps externe (90) qui entoure de manière axiale la couche de corps interne ;
la couche de corps interne définit une pluralité de premières perforations (88) s'étendant à travers celle-ci selon un premier motif et la couche de corps externe définit une pluralité de secondes perforations (98) s'étendant à travers celle-ci selon un second motif ; et
un espace (110) est défini entre la couche de corps interne et la couche de corps externe, l'espace constituant un passage d'écoulement fluide entre la première perforation et la seconde perforation ;
caractérisé en ce que les premières perforations (88) dans la couche de corps interne sont décalées par rapport aux secondes perforations (98) dans la couche de corps externe de façon que chaque perforation (98) de la couche de corps externe soit adjacente à une partie de la couche de corps interne (80) et chaque perforation (88) de la couche de corps interne soit adjacente à une partie de la couche de corps externe (90) de sorte qu'une ligne de visée directe à travers les premières perforations et les secondes perforations est évitée et de sorte que la couche de corps interne (80) agit en empêchant le matériau constituant le sac (14) d'être extrudé dans les perforations (98) et déchiré.

2. Dispositif atténuateur de bruit selon la revendication 1, dans lequel les premières perforations (88) dans la couche de corps interne ont un premier diamètre et les secondes perforations (98) dans la couche de corps externe ont un second diamètre, le premier diamètre des premières perforations dans la couche de corps interne étant sensiblement le même diamètre que le second diamètre des secondes perforations dans la couche de corps externe.

3. Dispositif atténuateur de bruit selon la revendication 1, dans lequel la couche de corps interne (80) comprend un alliage d'aluminium et la couche de corps externe (90) comprend un matériau en acier inoxydable.

4. Dispositif atténuateur de bruit selon la revendication 1, dans lequel l'espace (110) défini entre la couche de corps interne et la couche de corps externe est inférieur à l'épaisseur de la couche de corps externe.

5. Dispositif atténuateur de bruit selon la revendication 1, dans lequel le boîtier (12) comporte une première extrémité (30) pour recevoir un premier adaptateur (50) et une seconde extrémité (34) pour recevoir un second adaptateur (50), les premiers et second adaptateurs fixant le sac dans le boîtier.

6. Dispositif atténuateur de bruit selon la revendication 5, dans lequel la couche de corps interne (80) comporte une première extrémité (82) fixée dans le premier adaptateur (50) et une seconde extrémité (82') fixée dans le second adaptateur (50').

7. Dispositif atténuateur de bruit selon la revendication 1, dans lequel les premières perforations (88) dans la couche de corps interne (80) et les secondes perforations (98) dans la couche de corps externe (90) définissent chacune une forme généralement cylindrique.

8. Dispositif atténuateur de bruit selon la revendication 1, dans lequel les secondes perforations (98) dans la couche de corps externe (90) possèdent une première partie cylindrique en alignement coaxial avec une partie de forme tronconique.

9. Dispositif atténuateur de bruit selon la revendication 8, dans lequel la partie tronconique des secondes perforations (98) est définie par une paroi inclinée ayant un angle intérieur approximativement de 90°.

10. Dispositif atténuateur de bruit selon la revendication 1, dans lequel le passage d'écoulement fluide comporte une première partie qui est adjacente et coaxiale à la première perforation (88) et une seconde partie qui est adjacente et en communication avec la première partie du passage d'écoulement fluide et qui est également adjacente et en communication avec la seconde perforation (98) dans la couche de corps externe.

11. Dispositif atténuateur de bruit selon la revendication 10, dans lequel une partie de l'espace (110) entre la seconde partie du passage d'écoulement fluide et la couche de corps externe s'étend d'environ 0,13 à environ 0,18 mm (environ 0,005 à environ 0,007 pouce).

12. Dispositif atténuateur de bruit selon la revendication 1, dans lequel le sac (14) et le boîtier (12) définissent une chambre de pression qui est pressurisée pour contrarier les forces exercées sur le sac par l'écoulement de fluide pressurisé.

13. Dispositif atténuateur de bruit selon la revendication 1, dans lequel l'espace (110) s'étend d'environ 0,013 mm à environ 0,089 mm (environ 0,0005 à environ 0,0035 pouce).
